# DEMANDE DE BREVET EUROPEEN

(11) **EP 2 636 979 A1**
(43) Date de publication de la demande: **11.09.2013**
(21) Numéro de dépôt: 12198680.6
(22) Date de dépôt: 20.12.2012
(51) Int. Cl.: F28C 1/06, F28D 5/02, F28D 7/02, F28F 13/06, F28G 1/16, F28D 21/00

(54) **Echangeur air/liquide du type cyclonique perfectionné**

(30) Priorité: 06.03.2012 FR 1252017
(71) Demandeur: Air Processing Components, 69530 Brignais (FR)
(72) Inventeur: Minssieux, Frédéric, 69530 BRIGNAIS (FR)
(74) Mandataire: Denjean, Eric

(57) **Abrégé**

Echangeur air/liquide (1) se présentant sous la forme d'une cuve cylindrique (2) renfermant au moins un échangeur tubulaire (3) proprement dit se présentant sous la forme d'au moins un serpentin (4) connecté à ses deux extrémités à un circuit de liquide.

Selon l'invention,

- la cuve (2) est munie d'une entrée tangentielle (7) de l'air dit « air entrant » en partie haute se présentant sous la forme d'un caisson,
- le serpentin est agencé de manière coaxiale autour d'une cheminée centrale (18) d'évacuation de l'air dit « air sortant » débouchant en partie supérieure de ladite cuve (2), et
- la cuve (2) est pourvue de moyens (9) aptes à pulvériser un liquide dans le flux d'air entrant

## Description

L'invention se rattache au secteur technique des échangeurs air/liquide et concerne plus particulièrement un échangeur air/liquide du type cyclonique, perfectionné, qu'il soit utilisé tant pour des opérations de refroidissement que pour des opérations de récupération d'énergie.

L'invention s'applique plus généralement à tous les domaines dans lesquels il est nécessaire de créer des échanges thermiques entre de l'air et un liquide.

Par « refroidissement », on désigne le principe consistant à refroidir un liquide par échange thermique avec de l'air plus froid et un bulbe humide avantageux. L'utilisation d'un échangeur air/liquide pour ce type d'opération trouve une application avantageuse notamment dans les domaines de la climatisation, où il est nécessaire de refroidir des circuits d'eau chaude. Il s'agit par exemple la réjection de groupes frigorifiques, c'est-à-dire l'évacuation de calories vers l'extérieur.

Par « récupération d'énergie », on désigne le principe consistant à effectuer l'opération inverse. En d'autres termes, il s'agit de se servir d'une source de chaleur par exemple de l'air chaud, pour réchauffer un liquide par échange thermique. L'utilisation d'un échangeur air/liquide pour ce type d'opération trouve une application avantageuse dans les industries où de l'air chaud est généré. On peut citer à titre d'exemple les laveuses industrielles rejetant de l'air chaud humide.

Dans les deux cas précités, le but est de favoriser au maximum l'échange thermique entre l'air et le liquide pour obtenir un rendement énergétique maximum.

Il existe actuellement dans l'état de la technique des échangeurs air/liquide du type cyclonique. La demande FR2952705 décrit par exemple une installation pour la récupération de l'air contenu dans de l'air vicié, comprenant un échangeur air/liquide du type cyclonique. L'échangeur est utilisé pour des opérations de récupération d'énergie. Un tel échangeur air/liquide du type cyclonique se présente sous la forme d'une cuve cylindrique renfermant au moins un échangeur tubulaire se présentant sous la forme d'au moins un serpentin agencé à proximité de la paroi de la cuve, la cuve étant munie d'une entrée tangentielle de l'air vicié, en partie basse et d'une sortie radiale en partie haute de l'air une fois traité, l'échangeur tubulaire étant connecté à ses deux extrémités à un circuit de liquide circulant de l'extrémité supérieure à l'extrémité inférieure.

L'utilisation d'un tel échangeur air/liquide du type cyclonique donne des résultats satisfaisant en termes de récupération de calories. Toutefois, on a observé que le rendement d'une telle installation pouvait être amélioré.

La demande FR2958735 se propose notamment de répondre à ce problème d'amélioration du rendement en positionnant un déflecteur dans la partie haute du premier échangeur. Ceci permet d'éviter la fuite d'air non traité directement par la sortie radiale dudit échangeur. En effet, il avait été remarqué que la totalité du volume d'air extrait n'était pas toujours en contact avec l'échangeur tubulaire, ce qui peut limiter le rendement de l'installation comprenant un tel échangeur.

Le demandeur se propose dans la présente invention de répondre, par une autre solution et de manière générale, au problème d'amélioration du rendement énergétique d'un échangeur air/liquide du type cyclonique, qu'il soit utilisé tant pour des opérations de refroidissement que pour des opérations de récupération d'énergie.

La présente invention permettra également un nettoyage automatique de l'intérieur de l'échangeur et admettra en entrée tout type d'air, possédant toute valeur d'hygrométrie.

Pour résoudre un tel problème, il a été conçu et mis au point un échangeur air/liquide du type cyclonique se présentant sous la forme d'une cuve cylindrique renfermant au moins un échangeur tubulaire proprement dit, se présentant sous la forme d'au moins un serpentin connecté à ses deux extrémités à un circuit de liquide.

Selon l'invention cet échangeur est remarquable en ce que :
- la cuve est munie dans sa partie haute d'une entrée tangentielle de l'air dit « air entrant » se présentant sous la forme d'un caisson,
- le serpentin est agencé de manière coaxiale autour d'une cheminée centrale d'évacuation de l'air, dit « air sortant » débouchant en partie supérieure de ladite cuve, et
- la cuve est pourvue de moyens aptes à pulvériser un liquide dans le flux d'air entrant.

La présence de moyens aptes à pulvériser un liquide, notamment par exemple de l'eau, dans le flux de l'air entrant permet d'augmenter le coefficient d'échange thermique entre l'air entrant et les serpentins tubulaires. En d'autres termes, il y a apparition d'un premier transfert de calories facilité entre l'air vicié entrant et l'eau pulvérisée et un deuxième transfert de calories entre l'eau pulvérisée, qui ruisselle sur les serpentins, et les serpentins proprement dit. Ceci permet une amélioration considérable de l'échange thermique entre l'air entrant et l'échangeur tubulaire, et donc du rendement énergétique. La pulvérisation d'eau permet également à l'échangeur air/liquide de pouvoir fonctionner convenablement avec en entrée, un air qui n'est pas forcément humide car la pulvérisation d'eau humidifie l'air entrant et favorise les transferts thermiques.

De cette manière, pour des opérations de refroidissement d'un liquide chaud, celui-ci circule dans les serpentins tubulaires et l'air entrant utilisé est de l'air froid. Pour des opérations de récupération d'énergie, l'air entrant est de l'air chaud et un liquide froid circule dans les serpentins.

Lorsque l'échangeur est utilisé pour des opérations de récupération d'énergie à partir d'un air chaud vicié pollué, la pulvérisation d'eau permet aussi une dépollution optimale de celui-ci.

Pour des raisons d'hygiène, les éléments constitutifs de l'échangeur selon l'invention sont avantageusement réalisés en acier inoxydable. La pulvérisation d'eau permet également un nettoyage automatique en fonctionnement dudit échangeur. La quantité d'eau utilisée est néanmoins faible afin de limiter les risques de prolifération et de dissémination de micro-organismes, tels que les Legionella, et limiter également les opérations de traitement de l'eau telles que les vidanges à intervalle régulier.

Selon une autre caractéristique de l'invention, le serpentin de l'échangeur tubulaire est connecté à son extrémité inférieure à un collecteur inférieur assurant l'alimentation en liquide, et à son extrémité supérieure à un collecteur supérieur assurant l'évacuation dudit liquide.

Cela permet une circulation du liquide à contre-courant du flux d'air entrant et favorise également les échanges thermiques.

En fonction du volume d'air à traiter, en pratique entre 500 et 50 000 m³/h, ou bien de liquide à refroidir, l'échangeur tubulaire comprend entre deux et six serpentins tubulaires, avantageusement six, agencés de manière concentrique et contigüe les uns par rapport aux autres.

De préférence, les moyens aptes à pulvériser un liquide, tel que de l'eau, dans le flux d'air entrant se présentent sous la forme d'au moins une rampe de pulvérisation. Cette rampe de pulvérisation peut être localisée dans le caisson d'entrée tangentielle de l'air, ce qui permet de charger directement l'air entrant en eau et de favoriser directement l'échange thermique.

La rampe de pulvérisation peut également être circulaire et agencée au sommet de la cuve cylindrique de manière coaxiale autour de la cheminée centrale. Dans ce cas, la rampe de pulvérisation est apte à pulvériser du liquide dans une direction verticale vers le bas.

Dans un mode de réalisation préféré, la cuve peut comprendre une pluralité de rampes de pulvérisation agencées de manière coaxiale autour de la cheminée centrale et régulièrement répartie sur toute la hauteur de la cuve. Les rampes de pulvérisation peuvent notamment être localisées au dessus de chaque échangeur tubulaire. Dans cette forme de réalisation préférée, les rampes de pulvérisation sont aptes à pulvériser du liquide dans une direction horizontale.

La cuve peut en outre comprendre à la fois une rampe de pulvérisation dans le caisson d'entrée tangentielle de l'air et une pluralité de rampes agencées régulièrement sur toute la hauteur et la circonférence de ladite cuve.

Avantageusement la cuve est munie à son point bas d'un moyen d'évacuation des condensats.

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique en perspective de l'échangeur air/liquide du type cyclonique selon l'invention ;
- la figure 2 est une représentation schématique représentant une installation comprenant l'échangeur air/liquide du type cyclonique selon l'invention pour des opérations de récupération d'énergie ;
- la figure 3 est une représentation schématique représentant une installation comprenant l'échangeur air/liquide du type cyclonique selon l'invention pour des opérations de refroidissement d'un liquide.

Par simplification, les parties ou éléments d'une forme de réalisation qui se retrouvent de manière identique ou similaire dans une autre forme de réalisation seront identifiés par les mêmes références numériques et ne seront pas à nouveau décrits.

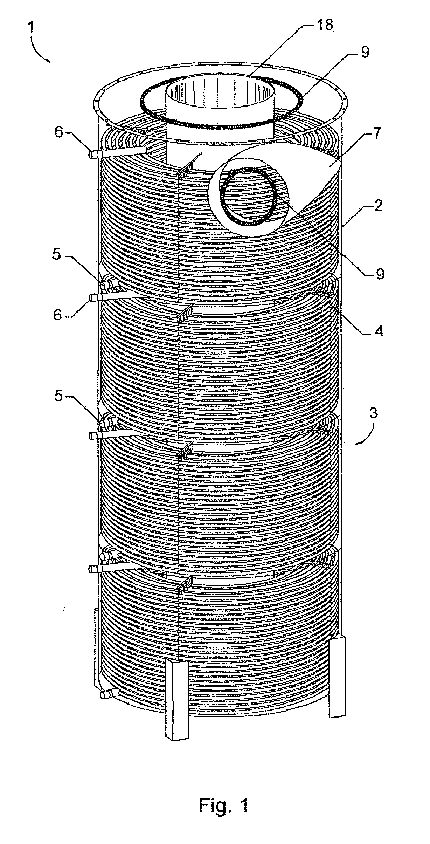

En référence à la figure 1, l'échangeur air/liquide (1) du type cyclonique perfectionné selon l'invention est constitué d'une cuve cylindrique (2) à l'intérieur de laquelle sont agencés quatre échangeurs tubulaires (3). Ces quatre échangeurs tubulaires (3) comprennent six serpentins (4) tubulaires concentriques disposés de manière contigüe, à proximité de la paroi interne du cylindre (2) et autour d'une cheminée centrale (18) d'évacuation de l'air traité, dit « air sortant » débouchant en partie supérieure de ladite cuve (2). Chacun des serpentins (4) est connecté à son extrémité supérieure et à son extrémité inférieure à un collecteur (5, 6). Le collecteur inférieur (5) assure l'alimentation de l'échangeur (3) en liquide, par exemple de l'eau, tandis que le collecteur supérieur (6) assure l'évacuation de l'eau. Ainsi, dans l'échangeur (1), le mouvement de l'air se fait à contre-courant de l'écoulement du liquide entre les extrémités inférieures des serpentins (4) et les extrémités supérieures. La pulvérisation de l'eau se fait dans le flux de l'air entrant.

La cuve cylindrique (2) est en outre munie d'un caisson (7) d'entrée tangentielle de l'air à traiter, dit « air entrant », au niveau de sa partie haute, et d'une pluralité de rampes de pulvérisation (9). Lesdites rampes de pulvérisation (9) sont agencées d'une part dans le caisson (7) d'entrée tangentielle de l'air et d'autre part, autour de la cheminée centrale (18) et régulièrement sur toute la hauteur et la circonférence de la cuve (2).

La rampe de pulvérisation (9) se trouvant au sommet de la cuve est apte à pulvériser de l'eau dans une direction verticale vers le bas. Les autres rampes de pulvérisation (9), étant régulièrement réparties sur toute la hauteur et la circonférence de ladite cuve (2), sont aptes à pulvériser de l'eau dans une direction horizontale.

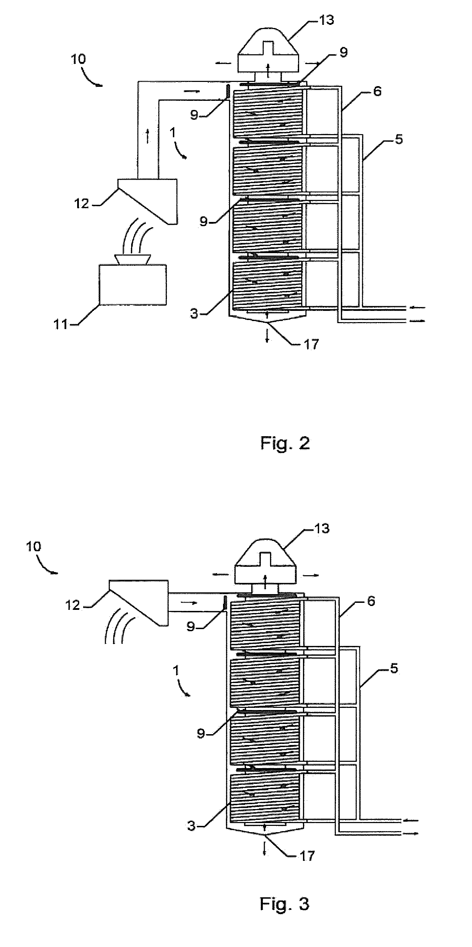

Sur la figure 2, on a représenté schématiquement et à titre d'exemple non limitatif, une installation (10) comprenant l'échangeur air/liquide (1) du type cyclonique perfectionné selon l'invention utilisé pour des opérations de récupération d'énergie, l'installation (10) étant destinée au traitement et au refroidissement de l'air extrait de fours, de laveuses industrielles, ou tout air rejeté d'un process de l'industrie.

Cette installation comprend une machine outils (11), un dispositif (12) de captage de l'air par l'entrée tangentielle, l'échangeur (1), ainsi qu'un ventilateur d'extraction (13).

L'installation (1) est représentée à titre d'exemple non limitatif en fonctionnement en boucle ouverte, l'eau circulant dans les serpentins (4) de bas en haut alimentant un ballon d'eau chaude par exemple, non représenté.

En pratique, de l'air chaud chargé en graisse extrait par le dispositif de captage (12) entre dans l'échangeur par le caisson (7). Les rampes de pulvérisation (9) pulvérisent de l'eau à une température proche de celle de l'air, dans le flux de cet air chaud. La force centrifuge générée grâce à la mise en oeuvre du ventilateur d'extraction (13) et de l'entrée tangentielle de l'air permet de séparer les particules solides et les gouttelettes. Les particules sont plaquées sur la paroi. La présence de l'eau permet également de dépoussiérer l'air entrant le cas échéant. La condensation de l'air et de l'eau, au contact des serpentins (4) entraine la formation d'un film d'eau s'écoulant sur la paroi entrainant de fait l'ensemble des particules solides.

D'une manière connue pour l'Homme du métier, le débit de l'air entrant et de pulvérisation de l'eau sont réglables. L'échangeur (1) selon l'invention fonctionne avec un débit de pulvérisation relativement faible pour diminuer la consommation d'eau entrainant ainsi une diminution du risque d'apparition de légionelles.

La cuve cylindrique (2) est munie à son point le plus bas d'un moyen d'écoulement (17) des condensats, par lequel les particules sont évacuées.

La conformation spécifique de cet échangeur (1) permet donc de condenser de manière efficace les particules solides contenues dans les fumées et en particulier les graisses contenues dans les fumées de machines de process. La condensation permet en outre d'éliminer la majorité des odeurs. Cette efficacité est le résultat du phénomène de condensation intervenant grâce à la combinaison des six serpentins (4) de chaque échangeur tubulaire, lesquels serpentins (4) étant agencés de manière concentrique à la périphérie de l'échangeur (1), du mouvement cyclonique de l'air et du passage à contre-courant de l'eau de bas en haut et de l'air chargé en graisses de haut en bas dans lequel est pulvérisée de l'eau.

L'installation (10) fonctionne ainsi de la manière suivante.

L'air chaud chargé en graisses, après passage dans le dispositif de captage de l'air (12), parvient à l'extrémité supérieure de l'échangeur (1). Cet air chargé en graisses présente en pratique une température comprise entre 45°C et 130°C. Il est, dès son entrée dans l'échangeur (1), mélangé avec de l'eau pulvérisée. Par l'intermédiaire de la combinaison de la force centrifuge, et du contact avec les serpentins tubulaires (4) dans lesquels circulent de l'eau froide, l'air est dépollué. Plus précisément, les particules solides sont séparées de la partie gazeuse qui vient se condenser au contact des serpentins (4). L'air vicié entre alors de manière tangentielle par le haut de la cuve (2) et adopte un mouvement cyclonique descendant puis, une fois traité, remonte par la cheminée et s'échappe par l'intermédiaire de l'extracteur (13).

Le mouvement de l'air, dans lequel est pulvérisé de l'eau, se fait à contre-courant de l'écoulement du liquide qui est présent dans les serpentins tubulaires (4). Un échange thermique est réalisé entre l'air vicié et les serpentins tubulaires (4). L'eau présente dans l'air permet d'augmenter l'efficacité de cet échange thermique.

L'échange thermique est amélioré du fait de l'apparition d'un premier échange thermique facilité entre l'air vicié et l'eau, puis d'un deuxième échange thermique facilité entre l'eau qui se condense et ruisselle sur les échangeurs tubulaires (3), et les échangeurs tubulaires (3). Ainsi, on rajoute dans l'échangeur air/liquide (1), deux échanges thermiques supplémentaires avec un milieu intermédiaire qui est l'eau pulvérisée. Dans cet échangeur (1), demeure toujours l'échange thermique d'origine qui est réalisé entre l'air vicié entrant et les échangeurs tubulaires (3). Ainsi, on obtient un échange thermique entre cet air vicié et ces échangeurs tubulaires (3) qui est augmenté par la présence du milieu intermédiaire qui est l'eau pulvérisée. On obtient en d'autres termes un échangeur air/eau pulvérisée/liquide. Le rendement énergétique est optimal.

L'eau réchauffée sert ensuite à alimenter, par exemple, une batterie de préchauffage d'air (figure 2) ou un ballon d'eau chaude (figure 3).

En d'autres termes, l'installation (10) de l'invention permet non seulement de dépolluer l'air de toutes particules qu'il pourrait contenir, et en particulier les graisses, mais également et surtout de récupérer les calories générées pour le chauffage d'eau ou le préchauffage d'air avec un rendement optimal par rapport aux échangeurs homologues de l'état de la technique.

Sur la figure 3, on a représenté schématiquement et à titre d'exemple non limitatif, une installation (10) comprenant l'échangeur air/liquide (1) du type cyclonique perfectionné selon l'invention utilisé pour des opérations de refroidissement d'un liquide, par l'intermédiaire de l'air extérieur par exemple.

Cette installation comprend un dispositif (12) de captage de l'air extérieur par l'entrée tangentielle, l'échangeur (1), ainsi qu'un ventilateur d'extraction (13).

En pratique, un liquide chaud à refroidir, provenant d'un groupe frigorifique par exemple, circule dans les serpentins tubulaires. Ledit liquide pénètre dans les serpentins par le collecteur inférieur (5) et est évacué par le collecteur supérieur (6).

La mise en oeuvre du ventilateur d'extraction permet de capter de l'air ambiant ou de l'air extérieur par l'intermédiaire du dispositif de captage de l'air (12), et de générer un flux cyclonique d'air froid.

Le liquide chaud est alors refroidit par échange thermique avec l'air ambiant ou l'air extérieur circulant selon un mouvement cyclonique dans l'échangeur air/liquide. Les rampes de pulvérisation pulvérisent simultanément de l'eau à une température proche du bulbe humide de l'air, sur le flux d'air froid entrant afin d'améliorer, comme déjà expliqué, l'efficacité de l'échange thermique entre le liquide à refroidir présent dans les serpentins tubulaires et l'air froid entrant.

Le liquide refroidi est alors évacué des serpentins tubulaires par le collecteur supérieur (6).

L'échangeur (1) selon l'invention permet également un auto-nettoyage en faisant un cycle avec de l'air sain et en rajoutant dans le circuit d'eau pulvérisée un produit de nettoyage. De cette manière, de l'eau nettoyante est pulvérisée par l'intermédiaire des rampes de pulvérisation (9) dans le flux de l'air et par conséquent sur les échangeurs tubulaires (3). Par cet effet, et également l'effet cyclonique de l'air, les serpentins (4) se trouvent nettoyés tout comme la paroi interne de la cuve cylindrique (2). Les condensats sont ensuite récupérés au point le plus bas (17) de ladite cuve cylindrique.

Il va de soi que l'invention n'est pas limitée à la forme de réalisation décrite ci-dessus à titre d'exemple mais qu'elle s'étend à toutes les formes de réalisation couvertes par les revendications ci-annexées.

## Revendications

1. Echangeur air/liquide (1) se présentant sous la forme d'une cuve cylindrique (2) renfermant au moins un échangeur tubulaire (3) proprement dit se présentant sous la forme d'au moins un serpentin (4) connecté à ses deux extrémités à un circuit de liquide, ***caractérisé en ce que :***
- la cuve (2) est munie dans sa partie haute d'une entrée tangentielle (7) de l'air dit « air entrant » se présentant sous la forme d'un caisson,
- le serpentin est agencé de manière coaxiale autour d'une cheminée centrale (18) d'évacuation de l'air, dit « air sortant » débouchant en partie supérieure de ladite cuve (2), et
- la cuve (2) est pourvue de moyens (9) aptes à pulvériser un liquide dans le flux d'air entrant.

2. Echangeur air/liquide (1) selon la revendication 1, ***caractérisé en ce que*** le serpentin (4) de l'échangeur tubulaire (3) est connecté à son extrémité inférieure à un collecteur inférieur (5) assurant l'alimentation en liquide, et à son extrémité supérieure à un collecteur supérieur (6) assurant l'évacuation dudit liquide.

3. Echangeur air/liquide (1) selon la revendication 1, ***caractérisé en ce que*** l'échangeur tubulaire (3) comprend entre deux et six serpentins tubulaires (4) agencés de manière concentrique et contigüe les uns par rapport aux autres.

4. Echangeur air/liquide (1) selon la revendication 1, ***caractérisé en ce que*** les moyens (9) aptes à pulvériser un liquide dans le flux d'air entrant se présentent sous la forme d'au moins une rampe de pulvérisation.

5. Echangeur air/liquide (1) selon la revendication 4, ***caractérisé en ce que*** la rampe de pulvérisation (9) est localisée dans le caisson (7) d'entrée tangentielle de l'air.

6. Echangeur air/liquide (1) selon la revendication 4, ***caractérisé en ce que*** la rampe de pulvérisation (9) est circulaire et agencée au sommet de la cuve cylindrique (2) de manière coaxiale autour de la cheminée centrale (18).

7. Echangeur air/liquide (1) selon la revendication 6, ***caractérisé en ce que*** la rampe de pulvérisation (9) est apte à pulvériser du liquide dans une direction verticale vers le bas.

8. Echangeur air/liquide (1) selon la revendication 4, ***caractérisé en ce que*** les moyens (9) aptes à pulvériser un liquide se présentent sous la forme d'une pluralité de rampes de pulvérisation (9) agencées de manière coaxiale autour de la cheminée centrale (18) et régulièrement répartie sur toute la hauteur de la cuve (2).

9. Echangeur air/liquide (1) selon la revendication 8, ***caractérisé en ce que*** les rampes de pulvérisation (9) sont localisées au dessus de chaque échangeur tubulaire (3).

10. Echangeur air/liquide (1) selon la revendication 9, ***caractérisé en ce que*** les rampes de pulvérisation sont aptes à pulvériser du liquide dans une direction horizontale.
